# EUROPEAN PATENT APPLICATION

(11) **EP 1 300 820 A1**
(43) Date of publication of application: **09.04.2003**
(21) Application number: 01308558.4
(22) Date of filing: 08.10.2001
(51) Int. Cl.: G09B 11/06

(54) **Drawing aid assembly**

(71) Applicant: Hasbro Inc., Pawtucket, RI 02862-1059 (US)
(72) Inventor: Jacobs, Warren Leigh, London W3 6LH (GB)
(74) Representative: Skone James, Robert Edmund

(57) **Abstract**

A drawing aid assembly is provided, having a tracing screen (5). A light generating assembly (13) is arranged to cause a light spot to impinge upon a first side of the tracing screen (5) and the light spot is transmitted to a second side of the tracing screen (5) such that the position of the light spot may be recorded by a user. A controller (11) controls the light generating assembly (13) such that the light spot is arranged to impinge at a number of predetermined positions upon the tracing screen in accordance with a figure to be traced. A store (12) is also provided for retaining data defining a number of figures, the store (12) being accessible by the controller (11). A selector is provided for selecting a figure to be traced from the number of figures within the store.

## Description

The present invention relates to a drawing aid assembly.

A number of devices are known for assisting a user to draw figures such as simple shapes. For example, US-A-3760505 and US-A-3055113 describe tracing devices in which a stylus is used to scrape an opaque powder from the surface of a screen in order to generate a visible mark upon the screen. A user controls the stylus with mechanical means such that independent motion of the stylus upon the X and Y axes can be effected by the user turning a corresponding knob with each hand. Such devices have been popular for many years as toys and educational aids for children. Analogous electronic devices are also known, for example as disclosed in US-A-4887968.

Displays such as television screens have also been used to assist in the teaching of artistic methods and techniques to users. For example, US-A-5252073 and US-A-5382233 each describe the attachment of a drawing sheet to a television screen. A user such as an art student traces over an image generated on the television screen, in order to practice various artistic techniques.

In accordance with a first aspect of the present invention a drawing aid assembly comprises:-
a tracing screen;
a light generating assembly arranged to cause a light spot to impinge upon a first side of the tracing screen wherein the light spot is transmitted to a second side of the tracing screen such that the position of the light spot may be recorded by a user;
a controller for controlling the light generating assembly such that the light spot is arranged to impinge at a number of predetermined positions upon the tracing screen in accordance with a figure to be traced;
a store for retaining data defining a number of figures, wherein the store is accessible by the controller; and
a selector for selecting the figure to be traced from the number of figures within the store.

The present invention therefore provides a drawing aid assembly in which one of a number of figures held in a store is selected and presented on the tracing screen by the positioning of the light spot at a number of locations.

In order to fully reproduce the figure, the user traces out a path defined by the respective positions of the light spot. The user may trace the figure directly upon the second side of the tracing screen, for example using a felt tip pen. However, typically a removable recording medium such as a sheet of paper is overlaid upon the tracing screen and the user traces onto the paper as the light spot is transmitted through the paper. The present invention provides both an educational and fun aspect to the drawing for users such as children, particularly as preferably the selected figure is only represented at any time by a single spot. This adds an element of excitement and mystery to the tracing procedure. The use of a recording medium also allows the user to retain their figure once it has been drawn.

The figures are predefined and contained as data within the store and typically each figure is constructed from a series of rectilinear lines between various points. The figures therefore typically comprise simple line drawings. The particular figure to be traced by the user may be either selected by the user or by the drawing aid assembly and corresponding operational modes of the drawing aid assembly are preferably provided for each case.

The selector typically comprises an input device such as a number of keys, which allow the user to provide instructions to the controller. This input device may also be used for providing other instructions such as mode selection, instructions during the drawing of the figures and On/Off operations. A similar function can be achieved by providing the selector in the form of a touch screen.

When the user selects a figure from the store typically visual information is provided as feedback to the user, identifying the figure to be selected. This is preferably achieved using the tracing screen, which is marked at a number of positions for example the markings being in the form of icons. Each position marking (icon) corresponds to a controller instruction and the user controls the position of the light spot from the light generating assembly to select a particular controller instruction.

The marked positions are preferably formed as surface relief upon the underside of the tracing screen. This is sufficient to disperse the light spot such that the marking is visible when the light spot impinges upon the marking. The location of the light spot corresponding to each marked position is known to the processor so that the corresponding figure can be selected. This method can also be used to provide other functions such as mode selection, or to provide instructions to the user from the processor.

A separate overlay screen may of course be used as an alternative to using the tracing screen.

The light generating assembly may take the form of a stationary light source with controlled mirrors or lenses providing the movement of the light spot upon the tracing screen. Alternatively the light generating assembly may also comprise a matrix of light sources such as light emitting devices (LEDs). However, typically the light generating assembly comprises a physically movable light source such as an LED.

This light source is preferably moved using a suitable drive mechanism. In general the drive mechanism is arranged to move the light source upon two independent axes within a plane parallel to the tracing screen. In one example of a drive mechanism, a holder is provided for containing the light source, the holder being slidably mounted upon two rods. Each rod is driven along one of the corresponding axes independently. A motor driven wire and pulley device may be used to move the light source. Therefore one such motor along with a wire and pulley system may be provided for movement upon each of these two axes.

Alternatively other drive mechanisms could be used, such as employing fine lead screws driven from motors with threaded followers.

Conveniently a cartesian coordinate system can therefore be employed. Similarly, a polar coordinate system could be used, for example by providing a bar rotatable about an axis, and a slider adapted to move to and fro along the bar.

It is important that the position of the light spot can be monitored with sufficient accuracy and therefore preferably the assembly further comprises a monitoring device for monitoring the light spot position. Possible monitoring methods that may be used include printed resistive material, counting feedback pulses from a commutator upon each motor, switch counting using a cam operated switch on each axis, and various optical methods using encoders (such as rotary or linear, transmissive or reflective electro-optical devices).

Preferably an (infra-red transmissive) encoder is used along with a detector, for example one such encoder system being provided to monitor movement relative to each axis. A linear encoder strip comprising a series of bars arranged along each axis is suitable for this purpose.

As many monitoring means only provide relative position information, preferably the assembly further comprises an datum monitor which produces a signal when the light spot is in a predefined position. This position may be in the form of an origin for use by the controller to repeatedly recalibrate the position information such that position of the light spot is known with high accuracy. The datum monitor may comprise a microswitch, switch or other optical/infra-red method such as by using an encoder.

In general the assembly is provided as a self-contained portable device and therefore it preferably comprises a housing formed from a durable material. As the user preferably uses a recording medium upon which to trace the figure, an attachment device may also be provided to hold the recording medium adjacent to the tracing screen. This attachment device may typically comprise clips or slidable members.

In accordance with a second aspect of the present invention we provide a method of aiding drawing comprising:-
selecting a figure using the selector of a drawing aid assembly according to the first aspect of the present invention;
positioning a recording medium adjacent to the second surface of the tracing screen;
operating the controller of the drawing aid assembly such that a light spot is transmitted through the tracing screen and the recording medium at a number of positions in accordance with the selected figure; and
marking the positions upon the recording medium such that the selected figure is reproduced.

The drawing of the figure is preferably aided by positioning the light spot at the number of predetermined positions sequentially. In one mode the light spot remains illuminated as it is moved between related positions along a rectilinear path whereas in another mode it is turned off during such movement. Preferably only one light spot impinges upon the tracing screen at any one time.

In cases where the light spot remains illuminated between related positions, the user follows the movement of the spot between the positions. This is preferably assisted by controlling the light spot travel speed such that it accelerates when moving away from a particular position and decelerates when approaching the next position. Typically a maximum traverse speed of 5 mm per second is used when the light spot is illuminated.

An example of a drawing aid assembly according to the present invention will now be described with reference to the accompanying drawings, in which:-
Figure 1 schematically shows the drawing aid assembly of the example from above;
Figure 2 is an image of a view inside the assembly;
Figure 3 is a more detailed image of the drive and monitor systems;
Figure 4 schematically illustrates the control system of the example;
Figure 5 shows the tracing screen icon arrangement;
Figure 6a shows the figure resolution in trace mode;
Figure 6b shows the figure resolution in mystery mode;
Figure 7 shows the data points in a figure; and
Figure 8 is a flow diagram of the example method.

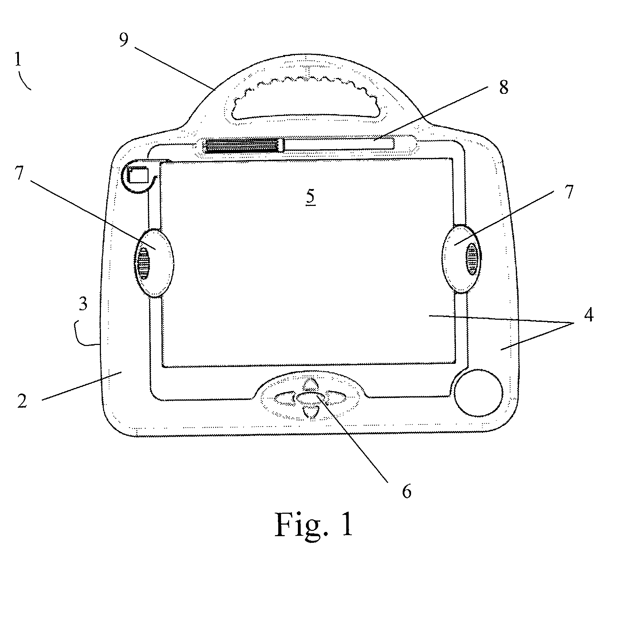

An example of a drawing aid assembly 1 according to the present invention is shown in Figure 1. This is in the form of a self-contained and portable children's toy. The drawing aid assembly 1 comprises a housing formed from upper and lower parts 2,3 respectively. These upper and lower parts 2,3 are separable to allow access to the interior of the drawing aid assembly 1 although when in use these two parts 2,3 are joined together.

As shown in Figure 1, the housing parts 2,3 are formed approximately in the shape of a flat and thin briefcase. An approximately planar upper surface 4 is provided which contains a tracing screen 5 and a selector in the form of user input controls 6 including UP, DOWN, LEFT, RIGHT and SELECT navigation buttons. These enable the user to operate the device.

Two clamps 7 are provided upon either side of the tracing screen 5 to hold a piece of paper against the screen whilst a shape is traced upon the paper. A pen holder 8 is also provided within the upper part of the housing 2 adjacent to the tracing screen 5. To allow the drawing aid assembly to be easily carried, a handle 9 is formed within the upper and lower parts of the housing 2,3.

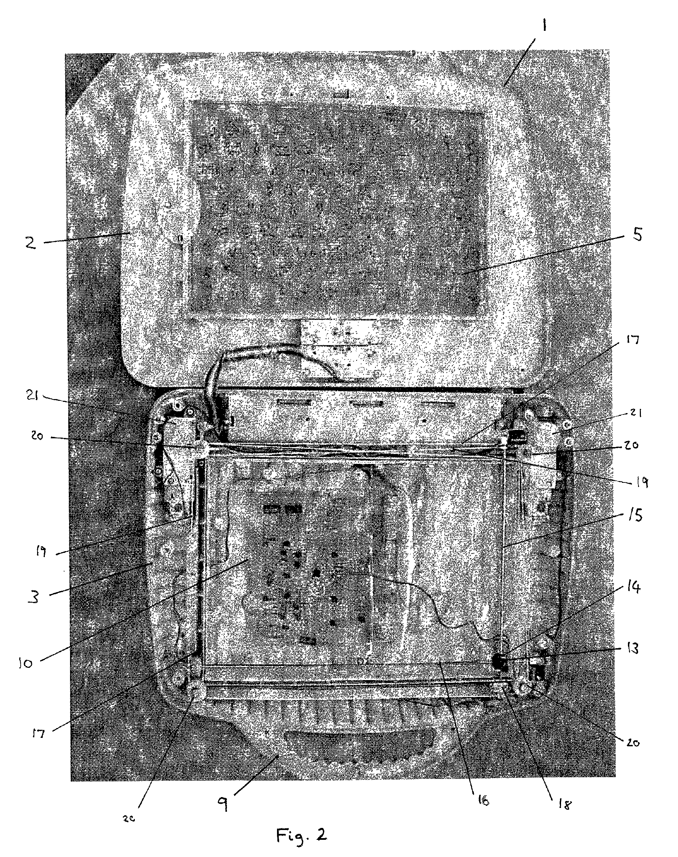

Figure 2 shows the interior of the drawing aid assembly 1 with the upper and lower housing parts 2,3 separated. The drawing aid assembly 1 is controlled by electronics contained upon a circuit board 10. This includes a controller 11 such as a Sunplus SPC41A micro-controller. The circuit board 10 also contains memory components in which are contained the software to operate the device. A store 12 is provided as ROM within the SPC41A micro-controller, although a separate store could of course be used. The store 12 contains data relating to a number of figures to be drawn, as will be described later. All of the systems within the drawing aid assembly 1 including the circuitry upon the circuit board 10 and the motors described below are powered by a battery.

The primary function of the electronics is to control the operation and movement of a light source in the form of an LED 13 having a narrow viewing angle and a 3 mm diameter. The approximate range of motion of the LED 13 is in a plane parallel to the tracing screen 5 such that all points within the tracing screen 5 may be illuminated by the LED 13. When operated, the LED 13 produces a light spot upon the inner surface of the tracing screen 5 which then passes through the screen.

The LED 13 is held in a holder 14 and this holder 14 is slidably attached to horizontal 15 and vertical 16 metallic rods. These rods correspond to the two axes of the rectangular tracing screen 5 respectively. The LED 13 and holder 14 are therefore constrained to move within the plane parallel to that of the tracing screen 5 and the holder 14 is at all times mounted upon each of the rods. The holder 14 may therefore be moved to any point beneath the tracing screen 5 by moving the horizontal 15 and vertical rods 16. During this process the holder 14 slides along each of the rods until the desired position is reached.

Each rod 15, 16 spans the tracing screen and is held at opposed sides of the tracing screen 5 upon rails 17 which are positioned along the sides of the tracing screen 5 and perpendicular to their corresponding rods 15,16. The ends of the rods 18 which are mounted upon the rails 17 are each attached to corresponding wires 19 and pulleys 20. These are shown in Figure 2, with the pulleys positioned at the corners of plane of movement of the holder 14 and the LED 13. The pulleys are powered by two motors 21, one being provided for each of the horizontal 15 and vertical 16 rods. These motors 21 are independently controlled by the controller 11 and the rods 15,16 are therefore moved normal to their axes by the application of a force from the motors to the rod ends 18 via the wires 19 and pulleys 20.

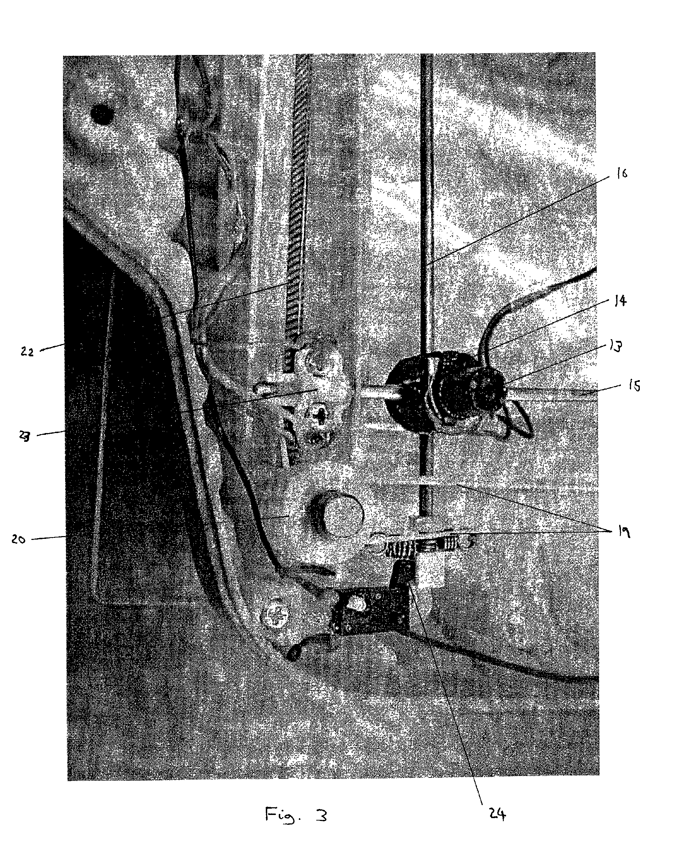

It is desirable to accurately monitor the position of the LED 13 during the use of the drawing aid assembly 1. In order to do this, an infra-red transmissive linear encoder system is provided upon each of the horizontal and vertical axes of movement. As shown in Figure 3, one of the two opposing rails upon each of the horizontal and vertical axes is fitted with an encoder strip 22 comprising a series of equally spaced black and transparent bars of approximate width 0.5 mm.

An infra-red detector 23 (comprising a transmitter-receiver pair) is attached to one end of each of the horizontal and vertical rods 15,16 in order to count the passage of the bars of the encoder strip 22. This information is provided to the controller 11 for use in controlling the motors 21.

As the encoders only provide relative position information, a datum 24 is provided to act as an origin for each of the two axes. The datum 24 takes the form of two micro switches, one being provided for each of the two axes. These micro switches are each activated when the LED 13 is positioned in the top lefthand corner of the tracing screen 5.

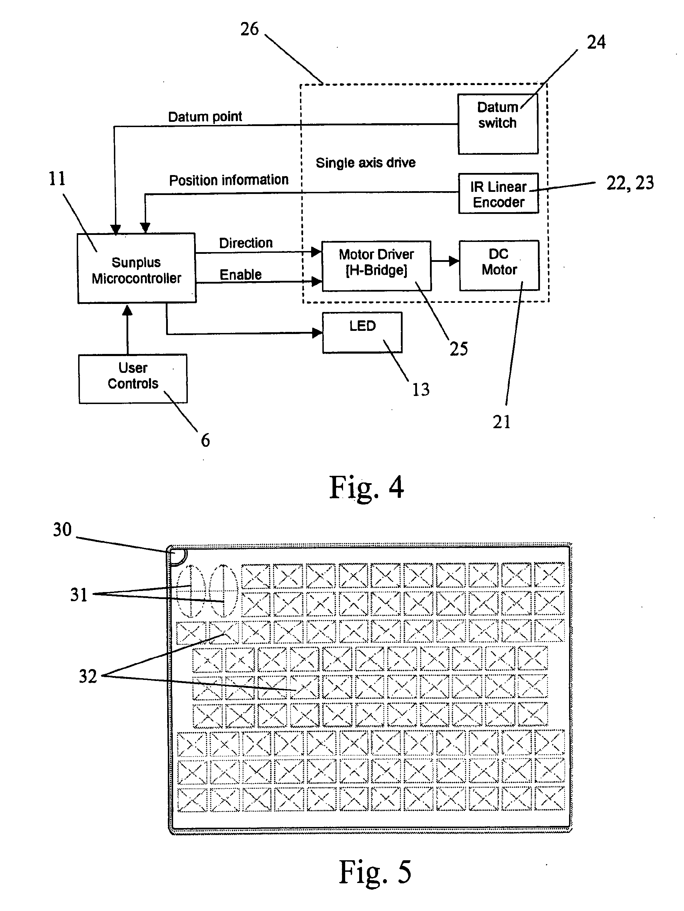

Figure 4 is a schematic diagram of the control system used in the present example. The micro-controller 11 controls the operation of the LED 13 and the position and motion of the LED 13 in accordance with the datum 24, the encoder system 22,23 and the motor 21. The motor 21 is operated by a motor driver 25 in the form of an H-bridge which provides a reversible motor function. The microswitch of the datum 24 for a particular axis indicates when the corresponding rod 15,16 is at the origin position and the infra-red encoder 22,23 provides motion information in the form of a count.

The H-bridge motor driver 25, the DC motor 21, the encoder 22,23 and the microswitch of the datum 24 form a single axis drive 26 for one of the two axis. One such drive is provided for each axis. The controller 11 is therefore able to track the position of the rods upon each axis and therefore, is aware of the position of the LED 13 at all times. The operation of the LED 13 itself is also under the control of the controller 11 and therefore this can be turned on and off at will.

As has been suggested, the user provides instructions to the drawing aid assembly 1 via the input controls 6. In order to provide a display to present various options to the user, the control system of the LED 13 is used in conjunction with a number of symbols provided upon the tracing screen 5.

As can be seen in Figure 2, the tracing screen 5 is divided upon its underside into a number of regions containing icons 30,31,32. These are formed by moulding the shapes of these icons into the undersurface of the control screen 5. No further marking of the screen is required as, when the LED 13 is positioned beneath one such symbol, the light is dispersed by the contours of the undersurface in such a way that the icon is visible.

The layout of the icons is shown in Figure 5. In the top lefthand corner of the tracing screen 5, in a position corresponding to that of the datum, a paper icon 30 is provided. The LED 13 can be moved beneath this region of the paper icon 30 to indicate when the user should place upon or remove paper from the tracing screen 5 under the paper clamps 7. Two mode icons 31 are also provided adjacent to the paper icon and these allow the user to select one of two possible operation modes according to this example. These are the "trace" and "mystery" modes to be described below.

The remainder of the icons are positioned in rows and columns upon the tracing screen 5 and these are in the form of 101 figure icons 32. These allow the user to select a particular figure of the 101 figures available, to trace in the tracing mode.

The user is able to select one of these icons by using the UP, DOWN, LEFT AND RIGHT keys in order to move the LED 13 under the particular icon and the respective function/selection of the icon is then selected by pressing the SELECT button.

During use, the drawing aid assembly 1 is operated by the user to enable the user to trace figures upon a piece of paper held within the paper clamps 7 on top of the tracing screen 5. To do this, the controller sequentially positions and operates the LED 13 such that the light spot is visible to the user as it passes through the tracing screen 5 and through the paper upon it. The user then marks the paper at figure points and along paths instructed by the position and operation of the LED 13. The user is therefore aided in the drawing of figures contained within the store 12. Whether the user is aware of the actual figure they are drawing is dependent upon the mode used.

An example of a method of operating the drawing aid assembly 1 will now be described. As has been mentioned, two modes are provided in connection with this example. In the "trace" mode, the user follows the light spot from the LED 13 known as the "tracing point", and its path forms an image of the figure comprising a number of lines between various figure points. The LED 13 generally remains illuminated as it moves along its rectilinear path between figure points, unless a break in the trace line is desired. In the alternative "mystery" mode, the light spot illuminates only specific figure points one by one, and the user traces a line between them constructing the figure as a result.

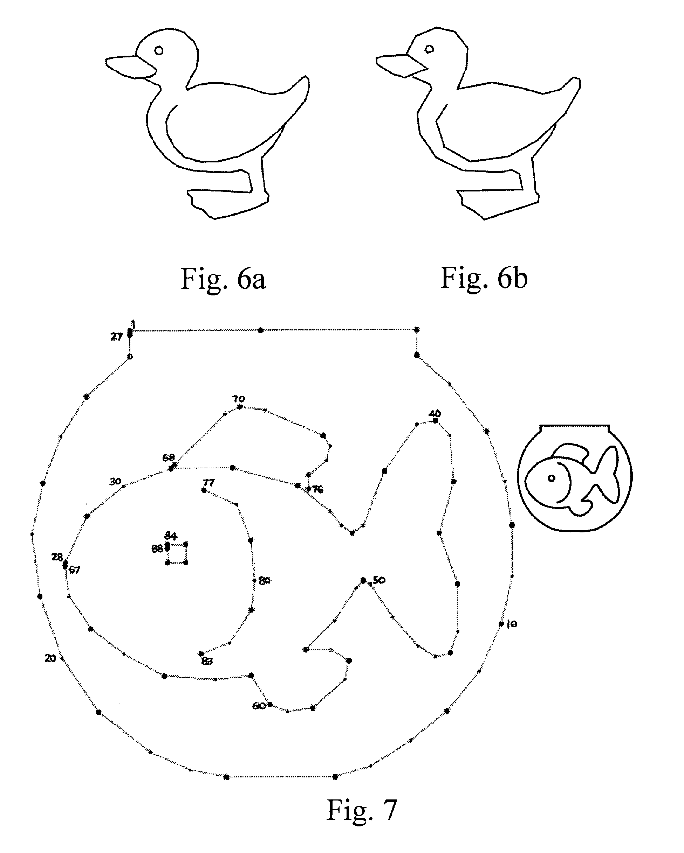

The figure image quality is an important consideration in this device. Each of the figures is formed from a series of rectilinear lines linking a number of figure points. The relative coordinates of the figure points are held within the store 12 as data associated with each figure. The nature of both the trace and mystery modes means that the figure image quality should be different in each mode. The number of figure points used to define a figure in the trace mode is greater than that in the mystery mode. This is illustrated in Figure 6a (tracing mode) and Figure 6b (mystery mode).

This is due to the fact that a figure would take an undesirable length of time to construct in the mystery mode if every figure point was used. The mystery mode figure points are therefore carefully selected to maintain the maximum quality of the figure image and they are therefore a subset of the figure points used in the trace mode. The data defining each figure point within the store also identifies whether it is a figure point within the mystery mode as well as that of the trace mode.

The figures are constructed from a number of "segments". A segment is one continuous line formed between two or more figure points where the user should not remove their pen from the paper.

An example of this is shown in Figure 7 which shows a figure of a fish within a bowl. The bowl outline is formed from a single segment by the connected figure points 1 to 27 shown in Figure 7. A second segment forms the outline of the fish between figure points 28 and 67 a third segment is used to draw the dorsal fin between figure points 68 to 76, a fourth segment draws the gills between figure points 77 and 83 and the final segment is used to draw the eye between figure points 84 to 88.

It will be appreciated that some of the figure points are coincident in coordinates. Figure 7 also shows various figure points marked more heavily and these correspond to figure points in both the trace mode and mystery mode. Examples of such points include the figure points numbered 28,68 and 70.

It is desirable that the number of lines on a figure should be kept suitably low to obtain a recognisable outline shape without the process becoming labourious. In connection with this example it has been determined that it should take no more than six minutes for the user to construct a single figure.

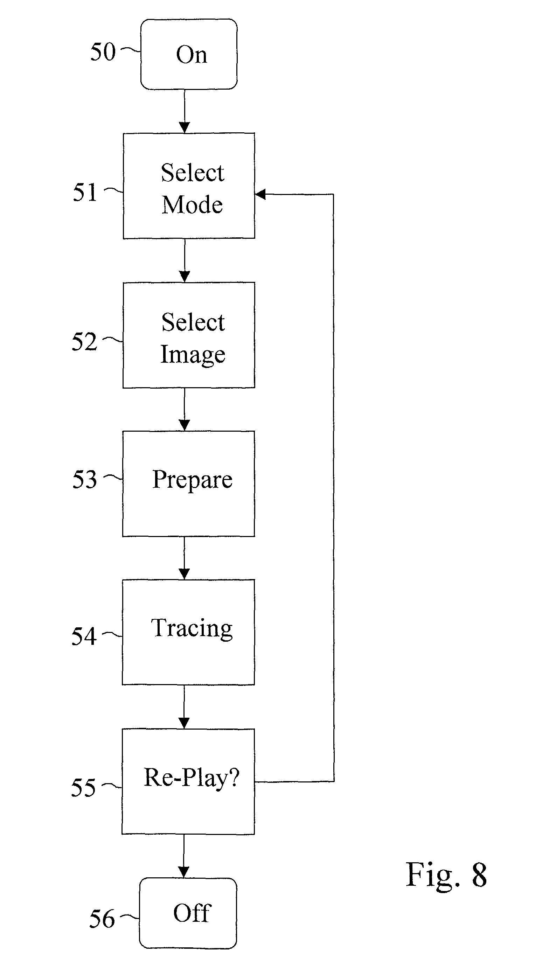

Figure 8 shows a flow diagram of an example method of operating the drawing aid assembly 1.

At step 50 in Figure 8 the drawing aid assembly 1 is turned on by the user pressing the SELECT button. At any subsequent time during the operation of the drawing aid assembly 1, pressing and holding the SELECT button for three seconds or more will power the unit down. An automatic power down also occurs three minutes after the completion of either the last figure segment for a figure, or from the last button pressed by the user.

At step 51, the user then selects either the trace mode or the mystery mode. The mode selection process is undertaken without a piece of paper on the screen. The light spot initially appears flashing and illuminates the tracing mode icon on the screen as a default. The user may navigate between the tracing and the mystery mode icons using the left and right buttons of the input control 6. The LED 13 is turned off such that the light spot is not illuminated when the LED 13 is moved by the controller 11 between the two positions corresponding to these mode icons.

The user actually selects the desired mode by pressing the SELECT button which causes the light spot to continuously illuminate for one second. Assuming the user has selected the trace mode at step 52, the user then selects figure to trace. This again occurs without a piece of paper on the screen and the light spot is initially moved to illuminate (flashing) the first of the 101 figure icons presented on the tracing screen 5.

The user then selects a figure by navigating around the icons on the screen using UP/DOWN/BACK/FORWARD buttons, with corresponding movements of the light spot. As in the case of mode selection, as the light spot moves between the various coordinates corresponding to the various figure icons, it remains off during the actual motion and flashes behind each icon when correctly positioned. Once the user has positioned the light spot under a figure they would like to draw, they simply press the SELECT button and then the light spot continuously illuminates for one second to confirm the selection.

At step 53, the drawing preparation occurs. The light spot first switches off and then moves to and illuminates (flashing) the paper icon. The user then places a piece of A5 paper onto the screen and clamps it in place using the paper clamps 7. The user then presses the select button once and the light spot then illuminates the paper icon for one second constantly and moves to the start location of the figure (not illuminated during motion). The tracing of the figure may then begin at step 54.

During tracing in the trace mode, the light spot firstly moves to the start location of the figure (first data point) as determined by the data corresponding to the figure held in the store. Once the light spot has arrived at the start location it begins flashing. The user presses the select button when ready to start tracing. The light spot (tracing point) then turns on constantly for one second and then starts moving whilst remaining illuminated. The user places their pen on the paper and follows the tracing point upon the paper.

The tracing point then pauses for half a second at each figure point along the path of the first figure segment. Once the last point within the first segment has been completed the light spot pauses and then it moves (whilst not illuminated) to the start location of the next segment. Once at the start of this second segment the light spot flashes and the user then presses the FORWARD or SELECT buttons to turn the tracing point on constantly for one second whilst stationary, and then the tracing point begins to move whilst illuminated along the data points of the second segment. This sequence then continues until the figure is completed.

At any point during the construction of the figure, the user can press the BACK button and the light spot will return to the start location of the previous figure segment.

If the mystery mode is chosen at step 51, then the step of selecting the figure at step 52 is performed at random by the controller. The subsequent preparation step 53 is the same in either mode. In the mystery mode, the tracing step 54 begins by the light spot moving to the start location of the figure whilst not illuminated. Once it has arrived at the start location the light spot flashes and the user then marks the dot at the start location. The user then presses the SELECT button and the light spot switches off and moves to the second figure point whilst unilluminated. Upon arriving at the second figure point the light spot is illuminated constantly and the user then draws a line between the first and second figure point and presses the FORWARD or SELECT button so that the light spot then moves to the next location. This continues until the end of the figure segment.

At any point during the construction of a figure in the mystery mode, the user can press the BACK button and the light spot will return to the previous data point. At the beginning of the new figure segment, the light spot flashes instead of being illuminated constantly and this signifies that the user should not complete a line joining the previous data point to this new point. In this case the user should place a dot in this new location and start a new figure segment. The sequence will continue until the figure is completed.

In either mode, the user then progresses to the replay step 55. At step 55, upon completion of a figure the light spot will switch off and move to the paper icon location. Upon arriving at the paper icon the light spot will flash signifying that the user should remove the paper from the screen. The light spot continues to flash until the user presses the SELECT button. Once this has been pressed, the light spot will illuminate the paper icon constantly for one second and then switch off. The light spot will then return to the mode selection icons, illuminating the icon of the mode that has just been completed.

The method therefore returns to the mode selection step 51.

The drawing aid assembly 1 is switched off at step 56 or at any time during the method steps 51 to 55 by pressing and holding the SELECT button.

The maximum speed of the light spot as the tracing point in the trace mode is set at 5mm per second under the control of the controller 11. It is also desirable that the light spot speed is higher than 5mm per second when the light spot is moving between the segments or icons when the LED 13 is not illuminated. This reduces any impatience in the user caused by the time for the light spot to move between icons or figure segments.

In trace mode the motors 21 are controlled to accelerate away from each figure point of a line and decelerate to the next figure point within a segment, allowing the user to predict the end figure points and those with rapid changes in direction during the trace mode.

The acceleration control can be performed using a software pulse width modulation scheme. Friction and stiction in the drive may make it difficult for low mark - ratio pulse width modulation to drive the motor. One way of addressing this problem is by using a PI control technique such as ramping up the duty cycle until movement is recorded, then reducing the drive for normal movement.

In the present example the light spot position is arranged to be accurate to within about 2 mm, as this allows the shapes to be connected together neatly to form a complete drawing. Using the linear encoder 22,23 described a spatial accuracy of about 0.5mm is obtained.

In the present example 101 figures are used and held as data within the store. An absolute start position corresponding to the first figure point, is defined in terms of a coordinate with respect to the (0,0) datum 24 for each figure Each subsequent figure point is held as a relative (X,Y) movement from the previous point and, as has been suggested, it may be necessary to repeat some points to draw closed shapes such as circles. Each figure point also has a pair of status bits to indicate the status of the LED at that point and to indicate whether the point is used in the mystery mode.

In this example an average of 108 figure points per figure is used. Of the 101 figures, a range of difficulty is provided from very simple figures to more complex ones, the figures being numbered and ordered according to their increasing difficulty.

For this reason, a pseudo-random figure selection process is actually used when in the mystery mode. When the mystery mode is selected for the first time (upon power-up) the controller selects a relatively simple figure. The figures are ordered by complexity (from top left to bottom right of the screen) and the controller therefore selects one of the first fifty figures at random whereas for subsequent selections in mystery mode, the controller 11 picks from the complete figure set of 101 figures.

## Claims

1. A drawing aid assembly comprising:-
a tracing screen (5) ;
a light generating assembly arranged to cause a light spot to impinge upon a first side of the tracing screen wherein the light spot is transmitted to a second side of the tracing screen (5) such that the position of the light spot may be recorded by a user;
a controller (11) for controlling the light generating assembly such that the light spot is arranged to impinge at a number of predetermined positions upon the tracing screen (5) in accordance with a figure to be traced;
a store (12) for retaining data defining a number of figures, wherein the store is accessible by the controller (11); and
a selector for selecting a figure to be traced from the number of figures within the store.

2. An assembly according to claim 1, wherein the selector comprises an input device (6) for operation by a user in order to provide instructions to the controller (11).

3. An assembly according to claim 2, wherein the tracing screen (5) is marked at a number of positions (30,31,32), each position corresponding to a controller instruction, wherein in use, the marked positions are used in accordance with light generating assembly so as to enable the user to select a particular controller instruction.

4. An assembly according to claim 3, wherein the marked positions (30,31,32) are formed from surface relief within the tracing screen (5).

5. An assembly according to claim 1 or claim 2, wherein the selector is the controller (11) .

6. An assembly according to any of the preceding claims, wherein the light generating assembly comprises a movable light source.

7. An assembly according to claim 6, further comprising a drive mechanism for moving the movable light source.

8. An assembly according to claim 7, wherein the drive mechanism is arranged to move the light source upon two independent axes substantially within a plane.

9. An assembly according to claim 8, wherein the drive mechanism further comprises a holder (14) containing the light source, the holder being slidably mounted upon two rods (15,16), wherein each rod is driven along one of the corresponding axes.

10. An assembly according to any of claims 7 to 9, wherein the drive mechanism comprises a wire (19) and pulley (20) device driven by a motor (21).

11. An assembly according to any of the preceding claims, further comprising a monitoring device for monitoring the position of the light spot.

12. An assembly according to claim 11, when dependent upon claim 8, wherein the monitoring device is provided to monitor the position of the light spot with respect to each axis.

13. An assembly according to claim 11 or claim 12, wherein the monitoring device comprises an optical detector (23) and a strip encoder (22).

14. An assembly according to any of the preceding claims, further comprising an datum monitor (24) adapted to produce a signal when the light spot is located at a predefined position.

15. An assembly according to any of the preceding claims, further comprising an attachment device (7) arranged to hold a recording medium adjacent to the tracing screen such that the user may trace the figure by marking the positions of the light spot upon the recording medium.

16. A method of aiding drawing comprising:-
selecting a figure using the selector of the drawing aid assembly (1) according to any of the preceding claims;
positioning a recording medium adjacent to the second surface of the tracing screen (5) ;
operating the controller of the drawing aid assembly such that a light spot is transmitted through the tracing screen (5) and the recording medium at a number of positions in accordance with the selected figure; and
marking the positions upon the recording medium such that the selected figure is reproduced.

17. A method according to claim 16, wherein the light spot is positioned at the number of positions sequentially.

18. A method according to claim 16 or claim 17, wherein the light spot is not illuminated during movement between positions.

19. A method according to any of claims 16 to 18, wherein a maximum of one light spot impinges upon the tracing screen (5) at any one time.

20. A method according to any of claims 16 to 19, wherein the figure to be traced is selected by the user.

21. A method according to claim 20 and when dependent upon claim 3 or claim 4, wherein the user selects the figure to be traced by moving the light spot beneath the marked position corresponding to that figure.

22. A method according to any of claims 16 to 19 and when dependent upon claim 5, wherein the figure to be traced is selected by the controller (11).
